(19) Europäisches Patentamt
European Patent Office
Office européen des brevets

(11) Numéro de publication: 0 323 775 B1

(12) # FASCICULE DE BREVET EUROPEEN

(45) Date de publication de fascicule du brevet: **07.04.93**

(51) Int. Cl.5: **E21B 43/32**, B01F 17/22, B08B 17/02, F17D 1/02

(21) Numéro de dépôt: **88403206.1**

(22) Date de dépôt: **16.12.88**

Le dossier contient des informations techniques présentées postérieurement au dépôt de la demande et ne figurant pas dans le présent fascicule.

(54) **Procédé pour retarder la formation et/ou réduire la tendance à l'agglomération des hydrates.**

(30) Priorité: **30.12.87 FR 8718436**

(43) Date de publication de la demande:
**12.07.89 Bulletin 89/28**

(45) Mention de la délivrance du brevet:
**07.04.93 Bulletin 93/14**

(84) Etats contractants désignés:
**FR GB IT NL**

(56) Documents cités:
**EP-A- 0 034 726**
**DE-A- 2 427 319**
**FR-A- 2 570 162**
**US-A- 3 644 107**

(73) Titulaire: **INSTITUT FRANCAIS DU PETROLE**
**4, Avenue de Bois Préau**
**F-92506 Rueil-Malmaison Cédex(FR)**

(72) Inventeur: **Sugier, André**
**34, avenue de la Chataigneraie**
**F-92500 Rueil Malmaison(FR)**
Inventeur: **Bourgmayer, Paul**
**87, avenue Paul Doumer**
**F-92500 Rueil Malmaison(FR)**
Inventeur: **Stern, Robert**
**5, rue Nollet**
**F-75017 Paris(FR)**

EP 0 323 775 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

L'invention concerne un procédé pour réduire la tendance à l'agglomération des hydrates de gaz naturel, de gaz de pétrole ou d'autres gaz par utilisation d'au moins un additif. Les gaz qui forment les hydrates peuvent notamment comprendre, par exemple, du méthane, de l'éthane, de l'éthylène, du propane, du propène, du n-butane, de l'i-butane, de l'$H_2S$ et/ou du $CO_2$.

Ces hydrates se forment lorsque de l'eau se trouve en présence du gaz, soit à l'état libre, soit à l'état dissous dans une phase liquide, telle qu'un hydrocarbure liquide, et lorsque la température atteinte par le mélange notamment d'eau, de gaz et éventuellement d'hydrocarbures liquides, tels que de l'huile, devient inférieure à la température thermodynamique de formation des hydrates, cette température étant donnée pour une composition des gaz connue et lorsque leur pression est fixée.

La formation d'hydrates peut être redoutée, notamment dans l'industrie pétrolière et gazière, pour lesquelles les conditions de formation d'hydrates peuvent être réunies. En effet, pour diminuer le coût de production du pétrole brut et du gaz, tant au point de vue des investissements qu'au point de vue de l'exploitation, une voie envisagée, notamment en production en mer, est de réduire, voire de supprimer, les traitements appliqués au brut ou au gaz à transporter du gisement à la côte et notamment de laisser toute ou une partie de l'eau dans le fluide à transporter. Ces traitements en mer s'effectuent en général sur une plate-forme située en surface à proximité du gisement, de manière que l'effluent, initialement chaud, puisse être traité avant que les conditions thermodynamiques de formation des hydrates ne soient atteintes du fait du refroidissement de l'effluent avec l'eau de mer.

Cependant, comme cela arrive pratiquement, lorsque les conditions thermodynamiques requises pour former des hydrates sont réunies, l'agglomération des hydrates entraîne le remplissage et le blocage des conduites de transport par création de bouchons qui empêchent tout passage de pétrole brut ou de gaz.

La formation de bouchons d'hydrates peut entraîner un arrêt de la production et provoquer ainsi des pertes financières importantes. De plus, la remise en service de l'installation, surtout s'il s'agit de production ou de transport en mer, peut être très longue, car la décomposition des hydrates formés est très difficile à réaliser. En effet, lorsque la production d'un gisement sous-marin de gaz naturel ou de pétrole et de gaz comportant de l'eau atteint la surface du sol marin et est ensuite transportée au fond de la mer, il arrive par l'abaissement de la température de l'effluent produit, que les conditions thermodynamiques soient réunies pour que des hydrates se forment, s'agglomèrent et bloquent les conduites de transfert. La température au fond de la mer peut être, par exemple, de 3 ou 4 °C.

Des conditions favorables à la formation d'hydrates peuvent aussi être réunies de la même façon à terre, pour des conduites pas ou trop faiblement enfouies dans le sol terrestre, lorsque par exemple la température de l'air ambiant est froide.

Pour éviter ces inconvénients, on a cherché dans l'art antérieur à utiliser des produits qui, ajoutés au fluide, pourraient agir comme inhibiteurs en abaissant la température thermodynamique de formation des hydrates. Ainsi, Kuliev et al dans "Surfactants studied as hydrate-formation inhibitors" Gazovoe Delo n°10 1972, 17-19, rapporté dans Chemical Abstracts 80, 1974 98122r, ont testé divers composés tensio-actifs non-ioniques ou anioniques pour retarder la formation d'hydrates à l'intérieur d'un fluide refermant un gaz notamment un hydrocarbure, et de l'eau.

On a également préconisé l'isolation des conduits de transport, de manière à éviter que la température du fluide transporté n'atteigne la température de formation des hydrates dans les conditions opératoires.

Ces deux solutions sont très onéreuses car, pour la première, la quantité d'inhibiteurs à ajouter peut atteindre 10 à 20 % de la teneur en eau et ces inhibiteurs sont difficiles à récupérer complètement ; et pour la seconde des solutions, l'isolation de la conduite est, elle aussi, très coûteuse.

Il a été découvert que certains additifs, qui jusqu'à présent n étaient pas utilisés dans ce but, présentent une excellente efficacité pour modifier le mécanisme de formation des hydrates, puisque au lieu de s'agglomérer rapidement les uns aux autres et de former des bouchons très solides, les hydrates formés se dispersent dans le fluide sans s'agglomérer et sans obstruer les conduites tant que la température du fluide transporté n'est pas trop basse.

L'utilisation de ces additifs est particulièrement avantageuse du point de vue économique, puisque les quantités utilisées sont très faibles (voire inférieures à 0,5 % en poids par rapport à l'eau) et que le coût des additifs est modéré.

L'invention propose donc un procédé pour réduire la tendance à l'agglomération des hydrates au sein d'un fluide comprenant au moins de l'eau et un gaz, dans des conditions où un hydrate peut se former à partir d'eau et de gaz, caractérisé en ce que l'on incorpore audit fluide un additif comprenant au moins un composé tensio-actif ou amphiphile non-ionique consistant en un hydroxycarbylamide choisi parmi les hydroxycarbylamides d'acides carbolyliques, substitués ou non substitués.

Par composés amphiphiles, on entend des composés comportant une partie hydrophile ou polaire et une partie oléophile ou lipophile.

En général, les composés amphiphiles non-ioniques sont caractérisés en ce qu'ils comportent :

- une partie hydrophile comportant des groupes soit oxyde d'alkylène, soit hydroxyles, soit encore alkylène amine,
- une partie oléophile comportant une chaîne hydrocarbonnée dérivée d'un alcool, d'un acide gras, d'un dérivé alkylé du phénol, ou d'une polyoléfine par exemple à base d'isobutène ou de butènes, et
- une liaison entre la partie hydrophile et la partie oléophile qui peut être par exemple un pont éther, ester ou amide ou encore être obtenue par un atome d'azote ou un atome de soufre.

Les composés amphiphiles utilisés dans l'invention sont des composés amidiques. Des résultats très intéressants ont été obtenus avec des composés amidiques hydroxylés, notamment des hydroxy-carbylamides d'acides carboxyliques substitués ou non substitués, des hydroxy-carbylamides d'acides aminés, tels que des peptides, ou avec des amides d'acides sulfoniques, lesdits amides étant utilisées à raison de 100 à 50.000 ppm en poids par rapport à l'eau qui forme avec le gaz des hydrates.

La fabrication de ces hydroxycarbylamides peut se faire à partir d'acides gras, d'esters de ces acides gras, des huiles et graisses végétales ou animales ou même d'anhydrides d'acides, où par exemple la première fonction acide forme un amide et la seconde est par exemple un ester d'un alcool à chaîne longue, en faisant réagir ces corps avec des hydroxycarbylamines comme par exemple la diéthanolamine ou la monoéthanolamine.

Par "hydroxycarbyl" on entend un radical hydrocarbyl substitué par au moins un groupe hydroxy.

Le produit obtenu comporte en majorité des hydroxycarbylamides, mais peut aussi contenir des produits secondaires comme des esters-amides ou des amines esters fréquemment présents même dans les produits commerciaux.

Ainsi, selon H. Maag, JAOCS 61,260 (1984), une composition typique d'hydroxycarbylamides fabriquée à partir d'acide gras et de diéthanolamine en excès comprend seulement 65 % de diéthanolamide d'acide gras, 22 % de diathanolasine libre, 10 % de sels d'amine d'acide gras et 1 % d'amide esters.

A titre comparatif, un amide fabriqué à partir d'un ester méthylique de ce même acide gras comporte plus de 90 % de diéthanolamide.

De même, les huiles végétales ou les graisses animales donnent des mono et diglycérides qui peuvent apporter des propriétés émulsifiantes bénéfiques.

Une autre méthode d'obtention des hydroxycarbylamides consiste à éthoxyler des amides d'acide gras.

Parmi les hydroxycarbylamides et polyhydroxycarbylamides on peut donner les formules suivantes :

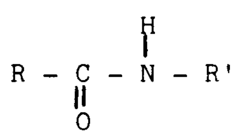

(1)

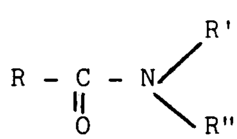

(2)

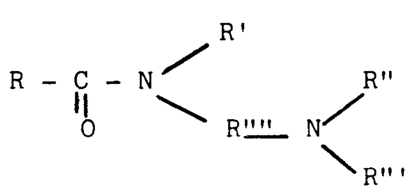

(3)

dans lesquels :

R - C = 0 est le radical de l'acide carboxylique et comporte de 4 à 28 atomes de carbone, le radical R pouvant être substitué.

R' R" et R"' sont des radicaux hydroxycarbyle, et R"" est un radical alkylénique de type $C_nH_{2n}$, n est entier et au moins égal à 1.

Les acides carboxyliques pourront être des acides linéaires saturés ou insaturés, tels que par exemple, les acides saturés suivants :
butyrique (C4;0), caproïque (C6:0), caprylique (C8:0), caprique (C10:0), laurique (C12:0), myristique (C14:0), palmitique (C16:0), stéarique (C18:0), arachidique (C20:0), béhénique (C22:0), lignocérique (C24:0) correspondant aux acides à nombres pairs d'atomes de carbone (4 à 24) ; et les acides insaturés suivants : palmitoléïque (C16:1), élaïdique (C18:1t), oléïque (C18:1c), linoléïque (C18:2), linolénique (C18:3), gadoléïque (C20:1), érucique (C22:1).

Pour chaque acide ci-dessus, on indique, en plus du nombre d'atomes de carbone, le nombre d'insaturations éthyléniques. En outre, c signifie cis et t trans.

Ces acides saturés et insaturés sont généralement présents tels quels ou en mélange sous forme liée, dans les huiles, les esters, dans les mélanges d'acides gras servant de matière première aux amides.

Les huiles utilisables les plus courantes sont, par exemple, les huiles d'arachide, de colza ancien et nouveau, de coprah, de coton, de germe de blé, de germe de maïs, d'olive, de palme, de palmiste, de soja, de suif, de saindoux, de tournesol, de beurre, de carthame, de tall-oil (extrait des résineux), de poissons, de karité.

Les acides carboxyliques des amides pourront être des acides hydroxycarboxyliques, tels que l'acide ricinoléique ou hydroxystéarique tiré du ricin ou du ricin hydrogéné.

Les acides carboxyliques pourront être des acides époxycarboxyliques, tels que l'acide époxystéarique, ou des mélanges tirés des huiles époxydées.

Les acides carboxyliques pourront être sous forme de polymères comme les acides estolisés obtenus par exemple à partir du ricin et dont la formule est :

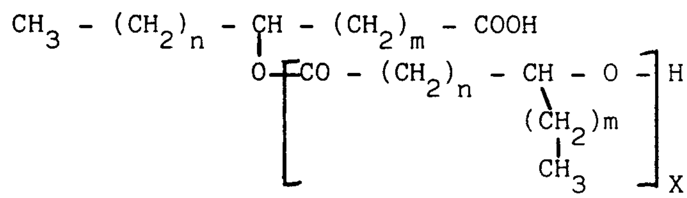

avec 1 ≦ X ≦ 20 et n + m = 15.

Les acides carboxyliques pourront être des diacides ou triacides correspondant aux dimères et trimères des acides gras ou à des acides dicarboxyliques, comme par exemple l'acide dodécanedioïque pour lequel l'une des fonctions acides peut être libre, un acide dimère d'un acide gras tel que l'acide oléique dimérésé, ou un acide à bas poids moléculaire tel que l'acide succinique, substitué en position 2 par un groupement polymérique du type isobutène.

Les acides carboxyliques pourront être des acides non linéaires, tels que l'acide abiétique.

L'acide carboxylique pourra être l'acide undécylénique.

L'acide carboxylique pourra être un acide alkénylsuccinique et l'anhydride pourra être un anhydride alkénylsuccinique. Le groupe alkényle de l'acide ou de l'anhydride pourra dériver d'un polymère ou d'un oligomère d'une monooléfine contenant 2 à 5 atomes de carbone.

Ce polymère pourra être un polyisobutène dans lequel le groupe alkényle (par exemple polyisobutényle) à une masse moléculaire moyenne de 300 à 5000.

Les amines servant à réaliser, avec les acides carboxyliques$_7$ la synthèse des amides et ayant pour formules $NH_2R'$ ou $NHR'R''$, dans lesquelles R' et R'' sont définis comme précédemment, sont, par exemple, des alkanolamines, telles que :
la monoéthanolamine : $OH - (CH_2)_2 - NH_2$,
la monopropanolamine : $OH - (CH_2)_3 - NH_2$,
la monoisopropanolamine : $CH_3 - CH (OH) - CH_2 - NH_2$,
le 2-amino-1-butanol : $CH_3 - CH_2 - CH (NH_2) - CH_2 - OH$,
le 1-amino-2-butanol : $CH_3 - CH_2 - CH (OH) - CH_2 - NH_2$,
la N méthyl éthanolamine : $CH_3 - NH - (CH_2)_2 - OH$,
la M butyléthanolamine : $CH_3 - (CH_2)_3 - NH - (CH_2)_2 - OH$,
la pentanolamine, l'hexanolamine, la cyclohexanolamine, les polyalcanolamines ou encore les polyalcoxyglycolamines, de formule :

$OH\text{-}(CH_2 - CH_2\ O)_n - CH_2 - CH_2 - NH_2$

et les diols aminés tels que :
la diéthanolamine $(OH - CH_2 - CH_2)_2$ NH,
la diisopropanolamine $(CH_3 - CH (OH)-CH_2)_2$ - NH, ou
la trihydroxyméthylaminométhane $(OH - CH_2)_3 - C - NH_2$.

Plus particulièrement, ces hydroxycarbylamides pourront faire partie des mono-hydroxycarbylamides et des N,N-dihydroxycarbylamides d'acides carboxyliques.

Les hydroxyamides pourront être des hydroxyamides aliphatiques ou cyclaniques. Les amides pourront être des mono ou diéthanolamides d'acides carboxyliques et pourront comporter 3 à 36 atomes de carbone et de préférence 8 à 20 atomes de carbone. Ces mono et diéthanolamides peuvent être représentés respectivement par les formules :

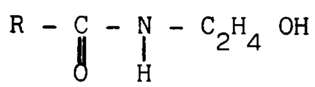

et

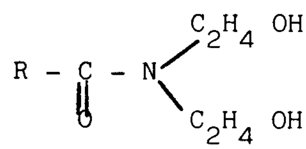

dans lesquelles

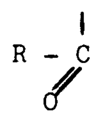

est le radical de l'acide carboxylique, R étant défini comme précédemment.

Les amides pourront être mono ou polyoxyalkylés, comme par exemple des mono et diéthanolamides éthoxylés dont le taux d'éthoxylation est de 1 à 20.

La synthèse des amides selon la formule 3 peut être obtenue en faisant réagir un excès d'alkanolamine, telle que la diéthanolamine, sur un acide gras, le radical R"" représentant alors $(CH_2)_2$.

Les hydrocarbylamides peuvent être obtenus en faisant réagir un acide aminé, tel qu'un peptide avec une chlorure d'acide ou un anhydride d'acide puis en réalisant une estérification ou une amidation. Les acides aminés peuvent provenir par exemple de la coupure d'une levure, de protéine de tourteaux de soja, de colza, d'un produit de fermentation ou de gélatine (d'os).

Les amides d'acides aminés peuvent être avantageusement alcoxylés.

Les hydrocarbylamides d'acides sulfoniques sont de préférence des alcanolamides et les acides sulfoniques peuvent être des acides arylsulfoniques, tels que l'acide dodécylbenzène sulfonique, ou des acides alkylsulfoniques.

Lorsque l'eau est mélangée à un effluent pétrolier comportant du gaz et de l'huile et ayant un rapport de volume (en anglo-saxon Gaz Oil Ratio - GOR -) inférieur à 400, et que l'eau est susceptible de former des hydrates avec le gaz, on pourra ajouter le composé à l'eau et/ou à l'effluent pétrolier dans une proportion comprise entre 50 et 50000 ppm en poids par rapport au poids d'eau et de préférence entre 100 et 5000 ppm. L'additif pourra comporter, en plus dudit composé, un alcool, tel que du méthanol ou du pentanol.

L'additif peut aussi comporter d'autres composés tensio-acitfs, par exemple des composés tensio-actifs anioniques.

L'invention ayant ainsi été décrite, il convient de signaler que la demanderesse a décrit et revendiqué dans la demande de brevet EP-A-323 774 un procédé pour réduire la tendance à l'agglomération des hydrates au sein d'un fluide comprenant au moins de l'eau et un gaz, dans des conditions où des hydrates peuvent se former à partir de l'eau et du gaz, caractérisé en ce qu'on incorpore audit fluide un additif comprenant au moins un composé tensio-actif ou amphiphile non-ionique choisi parmi les esters de polyols et d'acides carboxyliques, substitués ou non substitués, et les composés à fonction imide; et dans la demande de brevet EP-A-323 307 un procédé de transport dans une conduite d'un fluide comportant du gaz et de l'eau, et étant dans des conditions où au moins un hydrate se forme, les hydrates étant formés à partir dudit gaz et de ladite eau, caractérisé en ce qu'on injecte dans ledit fluide, avant ou pendant la formation de ou des hydrates, un additif comprenant au moins un composé tensio-actif adapté à réduire la tendance à l'agglomération des hydrates de manière à obtenir un ou des hydrates sous forme dispersée, et en ce qu on transporte ledit fluide contenant ce ou ces hydrates sous forme dispersée.

Les exemples suivants illustrent l'invention sans en limiter la portée. Les exemples 1 et 2 sont donnés à titre de comparaison.

Dans ces exemples, pour évaluer l'efficacité des additifs, on a procédé à des essais de formation d'hydrates à partir de gaz, de condensat et d'eau à l'aide d'un appareillage schématisé par la figure annexée.

L'appareillage comporte un réacteur 1 thermorégulé, de 2 litres de capacité, dans lequel est placé un liquide 2, tel qu'un mélange de condensat et d'eau, qui est agité en permanence par un agitateur 3 monté en bout d'une turbine. l'alimentation en gaz du réacteur 1 est régulée par un manomètre 4, la température du réacteur et de la boucle de circulation est contrôlée au moyen de bains thermostatiques dont la température est régulée par la sonde de température 5. Une canalisation 6 plongeant d'un côté dans le liquide 2 alimente par son autre côté une bouche de circulation 8 que l'on peut fermer par la vanne 7.

Sur la bouche de circulation 8 est placée une pompe 9 assurant la circulation du fluide et du gaz. La bouche 8 comporte en outre une chambre d'observation 10, isolable par deux vannes 11 et 12, dans laquelle on peut observer la formation d'hydrates.

En amont et aval de cette chambre se trouvent respectivement un indicateur de pression 13 et un indicateur de température 14. L'appareillage comporte une dérivation 15 de la chambre d'observation, cette dérivation étant munie d'une vanne d'arrêt 16.

Le fluide et le gaz, ayant traversé la chambre d'observation 10 ou la dérivation 15, rejoignent le réacteur 1 par une canalisation de retour 17. Une vanne 18 permet d'isoler le circuit de la canalisation de retour. Le réacteur 1 comporte en outre une soupape de sécurité 19.

L'alimentation en gaz du réacteur 1 est réalisée par le circuit désigné par 20 dans son ensemble et qui comprend, monté à la suite des uns des autres, les éléments suivants : un réservoir 21 de gaz, un détendeur 22, un manomètre 23 à pression consignée commandant le détendeur 22, une vanne de fermeture 24, un filtre 25, un clapet antiretour 26, un débimètre 27, une vanne électronique 28 commandée par le manomètre 4 et assurant la consigne de pression à l'intérieur du réacteur par modification du flux gazeux, une vanne d'arrêt 29 et une canalisation d'alimentation 30 pénétrant dans le réacteur.

Dans un exemple de réalisation, la boucle de circulation 8 fait 10 mètres de longueur et est réalisée en tube d'environ 19 mm (3/4") de diamètre intérieur. La pompe de circulation 9 permet de réaliser des vitesses d'écoulement jusqu'à 1 m/s.

La formation d'hydrates par réaction du gaz avec l'eau, se traduit par une consommation de gaz qui est déterminée par le débitmètre 27, et qui est contrôlée par la vanne électrique 28 et le capteur différentiel de pression 23, de manière que la pression soit maintenue constante dans le circuit au 1/50ème de bar près.

Pour déterminer la température à laquelle se forment les hydrates, on réalise à partir de la température ambiante, une descente rapide de température de 3° C par heure jusqu'à 10° C.

Ayant alors noté la température de formation des hydrates, qui se traduit par une consommation du gaz, on remonte la température du réacteur et de la boucle de circulation de 5° C au dessus de cette température de formation et on attend que la décomposition des hydrates soit complète. Cette décomposition se manifeste par un accroissement de la pression dans le réacteur 1 et par la disparition visuelle de l'opacité du fluide qui est produite par la présence d'hydrates.

Enfin, on réalise une descente lente en température à raison de 1° C/heure et l'on détermine la température à laquelle les hydrates commencent à se former, puis on détermine la température à laquelle le circuit est totalement bouché et où aucune circulation du fluide n'est possible.

Exemple n° 1

Dans cet exemple, on opère avec un fluide composé en volume de 20 % d'eau et de 80 % de condensat. La composition pondérale du condensat est pour les molécules ayant moins de 11 atomes de carbone : 20 % de paraffines et d'isoparaffines, 48 % de naphtènes, 10 % d'aromatiques, et pour les molécules ayant au moins 11 atomes de carbone de 22 % d'un mélange de paraffines, d'isoparaffines de naphtènes et d'aromatiques. Le gaz utilisé comprend en volume 98 % de méthane et 2 % d'éthane.

L'expérimentation est conduite sous une pression de 7 MPa maintenue constante par rapport de gaz.

Dans ces conditions, la température de début de formation d'hydrates, lors de la deuxième descente en température, est de 11,4° C, et on obtient un blocage de la circulation par croissance et coalescence des hydrates lorsque la température atteint + 11° C (284 K), soit 24 minutes après le début de formation des hydrates.

Exemple n° 2

Dans cet exemple, on opère comme dans l'exemple n° 1, avec le même fluide, le même gaz et la même pression, mais on ajoute au fluide en circulation 5 % poids de méthanol par rapport à l'eau du mélange. Dans ces conditions, on constate que la température à laquelle les hydrates commencent à se former est de 9,4 °C et que la température à laquelle aucune circulation de fluide n'est plus possible est de 9 °C.

Exemple n° 3

On opère comme dans l'exemple n° 1, mais on ajoute au fluide en circulation 0,1 % de diéthanolamides du coprah par rapport à l'eau du mélange. Une composition typique des acides présents dans l'huile de coprah est la suivante :
1,2 % hexanoïque (C6),
9,7 % octanoïque (C8),
6,3 % décanoïque (C10),
45,5 % dodécanoïque (C12),
18,2 % tétradécanoïque (C14),
8,7 % hexadécanoïque (C16),
1,8 % octadécènoïque (C18),
6,9 % octadécanoïque (C18:1),
1,7 % linoléïque (C18:2).

Dans ces conditions on constate que la température à laquelle les hydrates commencent à se former est de + 9 °C et qu'il y a blocage de la circulation de fluide à une température de - 4 °C.

Exemple n° 3 bis

On opère comme dans l'exemple n° 3, mais l'on maintient la température à -2 °C. On coupe la circulation du fluide et ensuite toutes les heures on met la pompe en route pour déterminer s'il y a blocage du circuit. Dans ces conditions l'on constate qu'au bout de 8 heures à -2 °C le circuit est bloqué.

Exemple n° 4

On opère comme dans l'exemple n° 3, mais on ajoute au fluide en circulation 0,25 % poids par rapport à l'eau de diéthanolamides du coprah. Dans ces conditions on constate que la température à laquelle les hydrates commencent à se former est de 7,5 °C et qu'à - 10 °C, température minimale à laquelle on a opéré, aucun blocage du fluide en circulation n'a été constaté.

Exemple n° 4 bis

On opère comme dans l'exemple n° 4 avec 0,25 % poids de diéthanolamides de coprah, mais lorsque l'on atteint -2 °C, température à laquelle il n'y a pas blocage, on arrête la circulation du fluide et au bout d'une heure d'arrêt on remet la pompe en service pendant 2 minutes pour voir s'il y a blocage. Dans ces conditions, on constate, au bout de 24 heures à -2 °C qu'aucun blocage ne s'est produit et que chaque fois que la pompe est remise en service, toutes les heures, la circulation du fluide contenant les hydrates s'effectue normalement.

Exemple n° 5

On opère comme dans l'exemple n° 1, mais on ajoute au fluide en circulation, 0,1 % poids par rapport à l'eau du fluide, de la monoéthanolamide du coprah éthoxylé avec un taux d'éthoxylation de 6. Dans ces conditions, la température de formation des hydrates est de 9,9 °C et la température du blocage de la boucle est de - 1 °C.

Exemple n° 6

On opère comme dans l'exemple n° 1, mais on ajoute au fluide en circulation 0,2 % poids par rapport à l'eau de diéthanolamides d'huile de colza.

Dans ces conditions, la température de début de formation des hydrates est de 8,3 ° C, et l'on constate qu'à -5 ° C aucun blocage du fluide en circulation ne s'est produit. Une composition typique des acides présents dans l'huile de colza essentiellement sous forme de glycérides est la suivante :
5,9 % hexadécanoïque (C16:0),
1,8 % octadécanoïque (C18:0),
0,5 % éicosanoïque (C20:0),
0,2 % docosanoïque (C22:0),
0,3 % hexadécènoïque (C16:1),
56,5 % octadécènoïque (C18:1),
24,2 % linoléïque (C18:2),
8,9 % octadécatriènoïque (C18:3),
1,1 % éicosènoïque (C20:1),
0,6 % docosènoïque (C22:1).

Exemple n° 7

On opère comme dans l'exemple n° 1, mais on ajoute au fluide en circulation 0,3 % poids par rapport à l'eau de diéthanolamides de suif.

Dans ces conditions, on constate que la température de début de formation des hydrates est de 8,1 ° C et qu'il n'y a pas blocage de la circulation du fluide jusqu'à une température de -5 ° C.

Une composition typique des acides présents dans le suif sous forme de triglycérides est la suivante :
26 % hexadécanoïque (C16:0),
23 % octadécanoïque (C18:0),
35 % octadécènoïque (C18:1),
2,4 % octadécadiénoïque (C18:2),
5 % acides comportant moins de 16 atomes de carbone.

Exemple n° 8

On opère comme dans l'exemple n° 1, mais on rajoute au fluide en circulation 400 ppm en poids par rapport à l'eau de diéthanolamides de beurre.

Dans ces conditions, on constate que la température de début de formation des hydrates est de 10 ° C et que la température à laquelle il y a un blocage de la circulation du fluide est de +3 ° C.

L'analyse du composé comportant les diéthanolamides de beurre obtenus à partir de diéthanolamine et d'esters méthyliques de beurre est la suivante :
5,3 % diéthanolamine,
5 % diéthanolamide de l'acide butanoïque (C4:0),
2,7 % diéthanolamide de l'acide hexanoïque (C6:0),
1,6 % diéthanolamide de l'acide octanoïque (C8:0),
3,7 % diéthanolamide de l'acide décanoïque (C10:0),
3,7 % diéthanolamide de l'acide dodécanoïque (C12:0),
11,5 % diéthanolamide de l'acide tétradécanoïque (C14:0),
30,7 % diéthanolamide de l'acide hexadécanoïque (C16:0),
24 % diéthanolamide de l'acide octadécanoïque (C18:0),
2 % d'esters méthyliques de beurre (n'ayant pas réagi), et le reste étant essentiellement des diéthanolamides d'acides divers contenus dans le beurre.

Exemple n° 9

On opère comme dans l'exemple n° 1, mais on ajoute au fluide en circulation 0,1 % en poids, par rapport à l'eau, d'un mélange de 95 % poids de diéthanolamides de beurre et de 5 % poids de dioctylsulfosuccinate de sodium à 65 % de concentration.

Dans ces conditions, on constate que la température de formation des hydrates est de 9,8 ° C et que la température à laquelle il y a blocage de la circulation du fluide est de + 2,7 ° C.

Exemple n° 10

On opère comme dans l'exemple n° 1, mais on rajoute au fluide en circulation 0,1 % poids par rapport à l'eau de diéthanolamide de l'estolide de l'acide ricinoléïque. Le poids moléculaire moyen de cet estolide est voisin de 700.

Dans ces conditions, la température de début de formation des hydrates est de 9,3 ° C et la température à laquelle on constate un blocage de la circulation du fluide est de 0,5 ° C.

Dans les exemples n° 1 et 2, en présence de méthanol seulement, ou avec le fluide à tester seul, on observe que le blocage de la bouche s'effectue très rapidement après le début de formation des hydrates, soit 0,4 ° C en dessous de la température de début de formation, soit 24 minutes après avoir atteint cette température, temps nécessaire à la coalescence et à la croissance des hydrates.

Par contre, lorsque l'on utilise des mono et diéthanolamides, on constate que la température de blocage est très inférieure à la température de début de formation des hydrates et qu'il faut beaucoup plus de temps, pour obtenir le blocage avec des concentrations très faibles en additif (0,1 %) (exemples 3 et 3 bis) et que pour des concentrations plus fortes on n'obtient pas de blocage par formation d'hydrates (exemples 4 et 4 bis) après un temps extrêmement long.

L'effet bénéfique de l'addition du dioctylsulfosuccinate de sodium, qui est un composé amphiphile anionique, à un composé amphiphile non-ionique consiste à abaisser substantiellement la température de début de formation des hydrates et notamment la température de blocage de la circulation de fluide. Les exemples 8 et 9 montrent que l'addition du dioctylsulfoniccinate de sodium aux diéthanolamides de beurre abaisse la température de début de formation des hydrates de 0,2 ° C et la température de blocage de 0,3 ° C.

**Revendications**

**1.** Procédé pour réduire la tendance à l'agglomération des hydrates au sein d'un fluide comprenant au moins de l'eau et un gaz, dans des conditions où un hydrate peut se former à partir d'eau et de gaz, caractérisé en ce que l'on incorpore audit fluide un additif comprenant au moins un composé tensio-actif non-ionique consistant en un hydroxycarbylamide choisi parmi les hydroxycarbylamides d'acides carboxyliques, substitués ou non substitués.

**2.** Procédé selon la revendication 1, caractérisé en ce que ledit hydroxycarbylamide est choisi parmi les monohydroxycarbylamides et les dihydroxycarbylamides d'acides carboxyliques.

**3.** Procédé selon la revendication 1 ou 2, caractérisé en ce que les acides carboxyliques sont des acides linéaires saturés ou insaturés provenant des huiles et des graisses végétales et animales.

**4.** Procédé selon l'une des revendications 1 ou 2, caractérisé en ce que les acides carboxyliques sont des acides hydroxycarboxyliques.

**5.** Procédé selon la revendication 1 ou 2, caractérisé en ce que les acides carboxyliques sont des estolides.

**6.** Procédé selon la revendication 1 ou 2, caractérisé en ce que les acides carboxyliques sont des acides époxycarboxyliques.

**7.** Procédé selon l'une des revendication 1 à 6, caractérisé en ce que ledit hydroxycarbylamide dérive d'une hydroxycarbylamine de formule $NH_2R'$ ou NHR'R" où R' et R"représentent chacun un radical hydroxycarbyle.

**8.** Procédé selon l'une des revendications 1 à 7, caractérisé en ce que ledit hydroxycarbylamide est un hydroxycarbylamide aliphatique ou cyclanique.

**9.** Procédé selon l'une des revendications 1 à 8, caractérisé en ce que ledit hydroxycarbylamide est un mono- ou un diéthanolamide d'acide carboxylique et contient de 3 à 36 atomes de carbone.

**10.** Procédé selon l'une des revendications 1 à 8, caractérisé en ce que ledit hydroxycarbylamide est mono- ou polyalcoxylé.

11. Procédé selon la revendication 10 caractérisé en ce que ledit hydroxycarbylamide est un mono- ou diéthanolamide éthoxylé dont le taux d'éthoxylation est de 1 à 20.

12. Procédé selon l'une des revendications 1 à 11, caractérisé en ce que ledit additif comprend en outre un composé tensio-actif anionique.

13. Procédé selon s'une des revendications 1 à 12, caractérisé en ce que ledit additif est incorporé audit fluide dans une proportion de 50 à 50 000 ppm en poids par rapport à l'eau.

14. Procédé selon la revendication 13, caractérisé en ce que ladite proportion est de 100 à 5 000 ppm.

**Claims**

1. A process for reducing the agglomeration tendency of hydrates within a fluid comprising at least water and a gas, in conditions under which hydrates can be formed from water and gas, characterized in that an additive comprising at least one non-ionic tensioactive compound consisting in a hydroxycarbylamide selected from hydroxycarbylamides of substituted or unsubstituted carboxylic acids, is incorporated into said fluid.

2. A process according to claim 1, characterized in that said hydroxycarbylamide is selected from monohydroxycarbylamides and dihydroxycarbylamides of carboxylic acids.

3. A process according to claim 1 or 2, characterized in that the carboxylic acids are straight chain, saturated or unsaturated acids derived from plant and animal oils and greases.

4. A process according to claim 1 or 2, characterized in that the carboxylic acids are hydroxycarboxylic acids.

5. A process according to claim 1 or 2, characterized in that the carboxylic acids are estolides.

6. A process according to claim 1 or 2, characterized in that the carboxylic-acids are epoxycarboxylic acids.

7. A process according to one of claims 1 to 6, characterized in that said hydroxycarbylamide is derived from a hydroxycarbylamine of formula $NH_2R'$ or NHR'R" wherein R' and R" each represent a hydroxycarbyl radical.

8. A process according to one of claims 1 to 7, characterized in that said hydroxycarbylamide is an aliphatic or a cyclanic hydoxycarbylamide.

9. A process according to one of claims 1 to 8, characterized in that said hydroxycarbylamide is a mono- or a diethanolamide of carboxylic acid and contains from 3 to 36 carbon atoms.

10. A process according to one of claims 1 to 8, characterized in that said hydroxycarbylamide is mono-or polyalkoxylated.

11. A process according to claim 10, characterized in that said hydroxycarbylamide is an ethoxylation mono- or diethanolamide whose ethoxylation ratio is from 1 to 20.

12. A process according to one of claims 1 to 10, characterized in that said additive further comprises an anionic tensio-active compound.

13. A process according to one of claims 1 to 12, characterized in that said additive is incorporated to said fluid in a proportion of 50 to 50,000 ppm by weight with respect to the water.

14. A process according to claim 13, characterized in that said proportion is from 100 to 5,000 ppm.

**Patentansprüche**

1. Ein Verfahren zur Verringerung der Agglomertionsneigung von Hydraten in einer wenigstens Wasser und ein Gas enthaltenden Flüssigkeit unter Bedingungen, unter denen Hydrate aus Wasser und gebildet werden, dadurch gekennzeichnet, daß ein Additiv in diese Flüssigkeit eingebracht wird, das wenigstens eine nichtionische oberflächenaktive Verbindung enthält, die aus einem aus den Hydroxycarbylamiden von substituierten oder nicht substituierten Carbonsäuren ausgewählten Hydroxycarbylamid besteht.

2. Ein Verfahren nach Anspruch 1, dadurch gekennzeichnet, daß das Hydroxycarbylamid ausgewählt ist aus Mono-Hydroxycarbylamiden und die Dihydroxycarbylamiden von Carbonsäuren.

3. Ein Verfahren nach Anspruch 1 oder 2, dadurch gekennzeichnet, daß die Carbonsäuren geradkettige, gesättigte oder ungesättigte von pflanzlichen oder tierischen Ölen oder Fetten abgeleitete Säuren sind.

4. Ein Verfahren nach Anspruch 1 oder 2, dadurch gekennzeichnet, daß die Carbonsäuren Hydroxycarbonsäuren sind.

5. Ein Verfahren nach Anspruch 1 oder 2, dadurch gekennzeichnet, daß die Carbonsäuren Ester bzw. Estolide sind.

6. Ein Verfahren nach Anspruch 1 oder 2, dadurch gekennzeichnet, daß die Carbonsäuren Epoxycarbonsäuren sind.

7. Ein Verfahren nach einem der Ansprüche 1 bis 6, dadurch gekennzeichnet, daß das Hydrxycarbylamid von einem Hydroxyisocyanat der Formel $NH_2R'$ oder $NHR'R''$ abgeleitet ist, worin R' und R" jedes einen Hydroxycarbylrest bedeutet.

8. Ein Verfahren nach einem der Ansprüche 1 bis 7, dadurch gekennzeichnet, daß das Hydroxycarbylamid ein aliphatisches oder cyclisches Hydroxycarbylamid ist.

9. Ein Verfahren nach einem der Ansprüche 1 bis 8, dadurch gekennzeichnet, daß das Hydroxycarbylamid ein Mono- oder Diethanolamid der Carbonsäure ist und 3 bis 36 Kohlenstoffatome enthält.

10. Ein Verfahren nach einem der Ansprüche 1 bis 8, dadurch gekennzeichnet, daß das Hydroxycarbylamid mono- oder polyalkoxyliert ist.

11. Ein Verfahren nach Anspruch 10, dadurch gekennzeichnet daß das Hydroxycarbylamid ein Mono- oder Diethanolamidethoxylat ist, dessen Ethoxylierungsgrad 1 bis 20 beträgt.

12. Ein Verfahren nach einem der Ansprüche 1 bis 10, dadurch gekennzeichnet, daß das Additiv zusätzlich eine anionische oberflächenaktive Verbindung enthält.

13. Ein Verfahren nach einem der Ansprüche 1 bis 12, dadurch gekennzeichnet, daß das Additiv in eine Flüssigkeit in einem Verhältnis von 50 zu 50.000 Gewichts-ppm bezogen auf das Wasser eingebracht ist.

14. Ein Verfahren nach Anspruch 13, dadurch gekennzeichnet, daß das Verhältnis 100 bis 5.000 ppm beträgt.

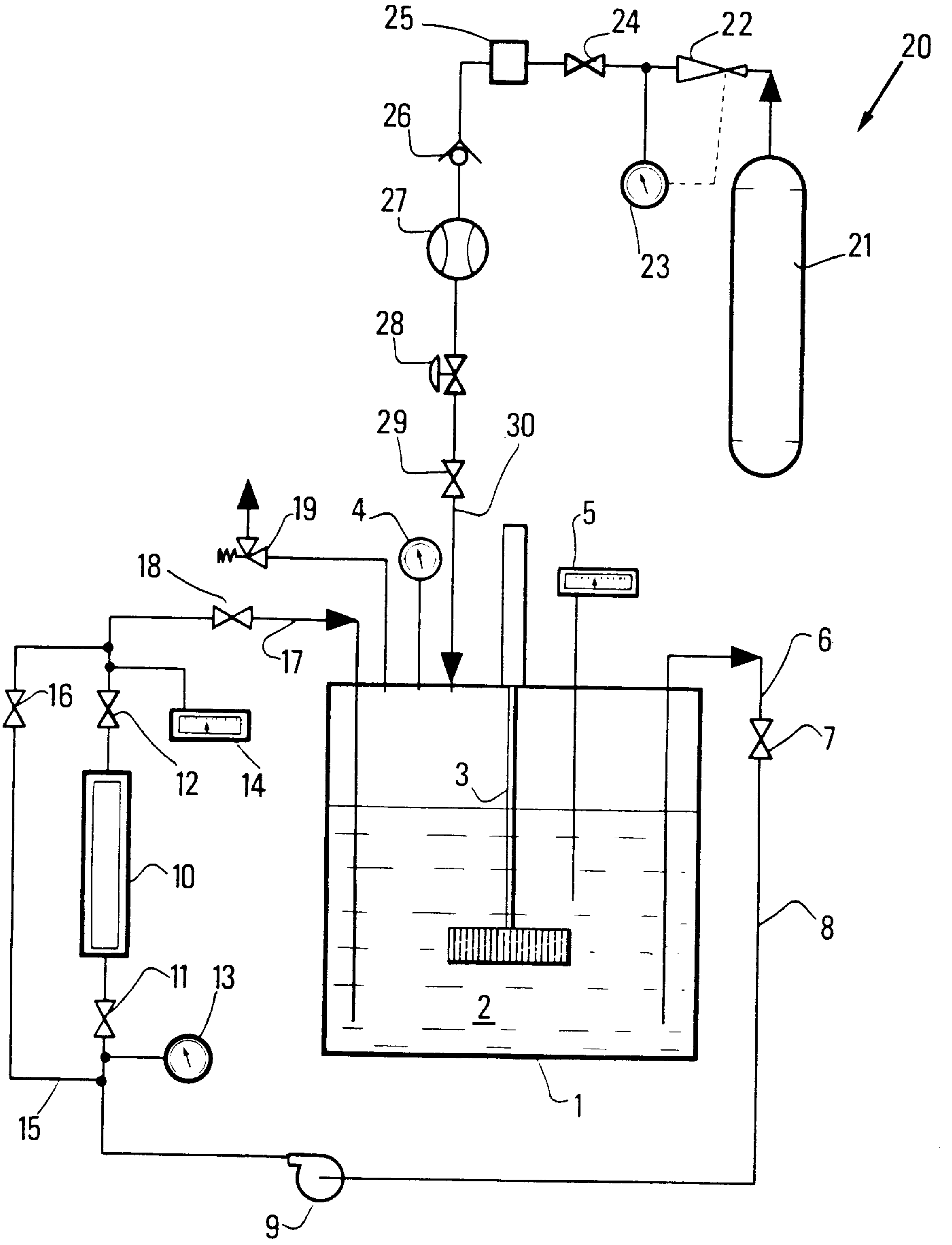
25
24
22
20
26
23
27
21
28
29
30
19
4
5
18
17
6
16
12
14
7
3
10
8
11
13
2
1
15
9